# EUROPEAN PATENT SPECIFICATION

(11) **EP 1 094 667 B1**
(45) Date of publication and mention of the grant of the patent: **02.05.2002**
(21) Application number: 99203415.7
(22) Date of filing: 18.10.1999
(51) Int. Cl.: H04N 7/167, H04N 7/16

(54) **Method for operating a conditional access system for broadcast applications**
VERFAHREN ZUM BETREIBEN EINES SYSTEMS MIT BEDINGTEM ZUGANG FÜR RUNDFUNKANWENDUNGEN
PROCEDE D'OPERATION D'UNE SYSTEME D'ACCES CONDITIONNEL POUR DES APPLICATIONS DE TELEDIFFUSION

(43) Date of publication of application: 25.04.2001
(73) Proprietor: Irdeto Access B.V., 2132 HD Hoofddorp (NL)
(72) Inventor: Wajs, Andrew Augustine, 2023 AA Haarlem (NL)
(74) Representative: de Vries, Johannes Hendrik Fokke

(56) References cited:
- EP-A- 0 200 310
- EP-A- 0 866 613
- WO-A-97/35431
- US-A- 4 866 770
- US-A- 4 868 866
- US-A- 5 461 675

## Description

The invention relates to a method for operating a conditional access system for broadcast applications, said conditional access system comprising a number of subscribers, each subscriber having a terminal including a conditional access module and a secure device for storing entitlements, each entitlement indicating a service for which the subscriber receiving the entitlement is entitled to watch, wherein entitlement management messages (EMM's) are sent to a secure device or group of secure devices, said EMM's each providing an entitlement and a corresponding expiry date, wherein the entitlements are refreshed periodically in accordance with their expiry dates by sending EMM's updating the expiry dates.

Such a method is known and is for example used in a pay television broadcasting system. If the updating or refreshment EMM's are not received before the expiry date, the secure devices will not allow access to the service or services for which the secure devices were entitled. Subscribers often disconnect their terminal equipment or tune their terminal to a broadcasting signal on which there are no EMM's carried. In such circumstances the refreshment EMM will not be received in time before the expiry date. In this manner subscribers will be forced to wait to be entitled over the air. In view of bandwidth constraints and the number of entitlements and number of subscribers in the conditional access system, the wait time can be extensive. Typically, if a subscriber needs to wait beyond a period of about thirty seconds, he will contact the subscriber management centre to be re-authorised. This results in a large number of telephone calls needed to be processed each time an entitlement expires unintendedly. Consequently, higher operational costs arise. To improve the time needed to perform a refreshment of all subscribers, techniques such as group addressing have been developed. Despite such developments, in case of a large base of subscribers, long wait times could still arise. These problems due to bandwidth limitations for the EMM messages make the operation of this type of conditional access system with positive authorisation very difficult with large numbers of subscribers.

The invention aims to provide a method of the above-mentioned type wherein these problems of long wait times are avoided.

Methods according to the invention are set out in claims 1 and 2.

According to the invention a method of the above-mentioned type is provided, characterized in that a set of extension entitlement management messages (extension EMM's) is sent to at least a part of all secure devices, each message indicating that all entitlements having an expiry date within a predetermined first period are extended with a predetermined second period, wherein EMM's updating the expiry dates are sent after the extension EMM's.

In this manner it is obtained that during the first period all entitlements of at least a part of all secure devices are extended by sending the extension EMM's during the first period to thereby extend the entitlements during the second period. After sending these extension EMM's, the normal updating or refreshment EMM's can be sent for updating each entitlement at each subscriber individually.

According to the invention an alternative embodiment is characterized in that each EMM comprises an entitlement expiry date and an entitlement receipt date, which dates are stored in the secure device, wherein a set of extension entitlement management messages (extension EMM's) is sent to all secure devices, each message indicating a given date from which all entitlements of the secure device have not changed, wherein if the receipt date for any entitlement is after said given date, all entitlements are extended with a predetermined second period, wherein EMM's updating the expiry dates are sent after the extension EMM's.

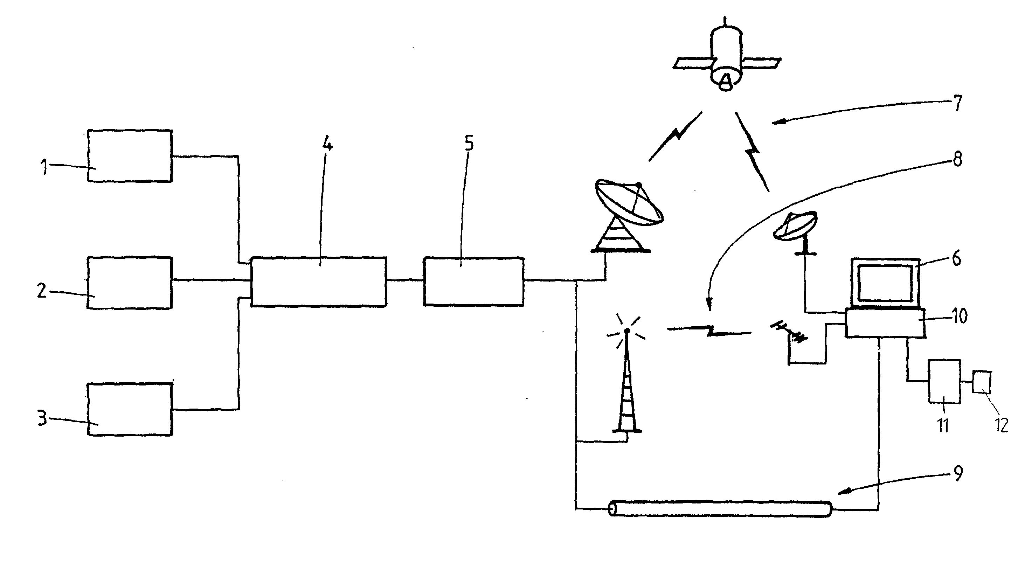

The invention will be further explained by reference to the drawing showing a broadcast application in which an embodiment of the method of the invention is implemented.

In the broadcasting application shown, three broadcasters 1-3 are coupled with a multiplexer unit 4 comprising means for scrambling, encoding and compressing broadcast signals provided by the broadcasters 1-3. The thus obtained digital data streams are multiplexed into a digital transport stream, for example in accordance with the MPEG-2 standard. In the embodiment shown this digital transport stream is modulated by way of a modulator 5 before transmission. The operator of the equipment including the multiplexer unit 4 and modulator 5 is responsible for transmitting the signal to the receiving equipment of the public, one television set 6 being shown by way of example. The transmission of the signal may be carried out through one or more telecommunication channels including a satellite link 7, terrestrial link 8 or a cable system 9. One or more of the broadcasters 1-3 may be private broadcasters operating according to the concept of pay television, which implies subscription. This means that people wishing to view programs broadcasted by a particular broadcaster, have to subscribe to such a broadcast, and pay the appropriate fee.

Access to anyone of the broadcast signals provided by the broadcasters 1-3 requires a terminal 10 which for the subscription requiring services includes a conditional access module 11 and a secure device 12, generally provided in the form of a smart card which can be connected to the conditional access module 11. The remaining part of the terminal 10 is known as such and needs not be described in detail.

Regarding the conditional access to the services requiring subscription, it is known as such to send entitlement management messages or EMM's and entitlement control messages or ECM's to the subscribers, i.e. to the smart cards 12.

It is noted that in the present specification the term "service" indicates any type of program for which an entitlement is needed, including a channel, a specific event or any other item of interest.

In such a conditional access system, generally a positive authorisation mechanism is used for entitlement control. An EMM is sent to a smart card or a group of smart cards using either individual or group addressing, the EMM indicating that a card is entitled to watch a service. Each subscriber can have a number of entitlements for different services. The entitlement structure generally comprises an identification or entitlement number and an entitlement expiry date. This information is stored in the smart card 12. In this manner certain forms of piracy are avoided. However, it is necessary to send refreshment EMM's updating the expiry date. If such a refreshment or updating EMM for a specific entitlement is not received before the expiry date, the smart card 12 will not allow access to the service involved. In practice subscribers often disconnect their terminal equipment or tune their terminal to a broadcasting signal on which there are no EMM's carried. In such circumstances the refreshment EMM will not be received in time before the expiry date. This may cause a large of number of telephone calls needed to be processed at the subscriber management centre and this causes high operational costs.

Even with the use of group addressing techniques a long period of time is required to update all entitlements at all subscribers. As an example in a practical broadcast application a conditional access system may comprise 10 million subscribers and 120 active entitlements. With a practical capacity for EMM's of 200 Kbit/s, a potential wait time of 2.5 hours before a refreshment EMM for a predetermined service arrives, is obtained.

According to the present invention, expiry of an entitlement by not receiving a refreshment EMM before the expiry date is prevented in the following manner.

A set of extension entitlement management messages or extension EMM's is sent to the entire base of smart cards 12, either using group addressing or individual addressing. Each extension EMM indicates to a smart card 12 that all entitlements with an expiry date within a predetermined first period, i.e. with an expiry date within a specified number of days, can remain active for a predetermined second period. In this manner the entitlements of all smart cards are extended for the second period. During the thus obtained period in which the smart cards will allow access to the services for which entitlements are stored, the normal updating EMM's can be sent to the subscribers updating the entitlements of the smart cards in a normal manner for a next period. As the extension EMM's refer to all entitlements stored in the smart card, the extensions can be provided to all smart cards in a relatively short time. Thereafter sufficient time is available to update all individual subscriptions within the entire base of subscribers.

In case group addressing is used, all entitlements of all subscribers are first extended in the described manner. Thereafter, individual refreshment EMM's can be forwarded, wherein these refreshment EMM's are first sent to those subscribers which have changed their subscription, for example by terminating or adding one or more subscriptions to specific services.

It is also possible to send the extension EMM's using individual addressing, wherein those addresses where subscriptions have been terminated do not receive the extension EMM's. It is further possible to add individual EMM's to the set of extension EMM's, wherein the individual EMM's update the expiry date of the unchanged subscriptions only.

As an alternative, an EMM could store not only an entitlement expiry date but also an entitlement receipt date in the smart card. In the above-described manner a set of extension EMM's is sent to the entire base of smart cards 12. In this case each extension EMM indicates a date from which the entitlements of a smart card have not changed. If the entitlement receipt date for any entitlement is after the date provided by the extension EMM, the smart card extends the expiry date of any entitlement by the predetermined second period.

In the embodiments described the conditional access module 11 and the secure device 12 are shown as physically separate devices. It will be understood that the conditional access module and/or the secure device can also be part of the terminal 10 or implemented in the terminal 10 by suitable programming. Therefore, the terms conditional access module 11 and secure device 12 as used in the specification and claims are not restricted to physically separate parts.

The invention is not restricted to the above-described embodiments which can be varied in a number of way within the scope of the claims.

## Claims

1. Method for operating a conditional access system for broadcast applications, said conditional access system comprising a number of subscribers, each subscriber having a terminal including a conditional access module and a secure device for storing entitlements, each entitlement indicating a service for which the subscriber receiving the entitlement is entitled to watch, wherein entitlement management messages, EMM's, are sent to a secure device or group of secure devices, said EMM's each providing an entitlement and a corresponding expiry date, wherein the entitlements are refreshed periodically in accordance with their expiry dates by sending EMM's updating the expiry dates, **characterized in that** a set of extension entitlement management messages (extension EMM's) is sent to at least a part of all secure devices, each extension entitlement management message indicating that all entitlements having an expiry date within a predetermined first period are extended with a predetermined second period, wherein EMM's updating the expiry dates are sent after the extension EMM's.

2. Method for operating a conditional access system for broadcast applications, according to the preamble of claim 1, **characterized in that** each EMM comprises an entitlement expiry date and an entitlement receipt date, which dates are stored in the secure device, wherein a set of extension entitlement management messages, extension EMM's, is sent to all secure devices, each extension entitlement management message indicating a given date from which all entitlements of the secure device have not changed, wherein if the receipt date for any entitlement is after said given date, all entitlements are extended with a predetermined period, wherein EMM's updating the expiry dates are sent after the extension EMM's.

3. Method according to claim 1 or 2, wherein the extension EMM's are sent using group addressing.

4. Method according to claim 1 or 2, wherein the extension EMM's are sent using individual addressing.

5. Method according to any one of the preceding claims, wherein the set of extension EMM's comprise individual EMM's for predetermined secure devices for which the subscription has changed, said individual EMM's updating the expiry date of the unchanged subscriptions only.

## Patentansprüche

1. Verfahren zum Betrieb eines bedingten Zugriffsystems für Sendeanwendungen, wobei das bedingte Zugriffsystem eine Anzahl von Teilnehmern umfaßt, jeder Teilnehmer ein Terminal besitzt einschließlich eines bedingten Zugriffmoduls und einer sicheren Einrichtung zur Speicherung von Berechtigungen, wobei jede Berechtigung einen Service anzeigt, für den der Teilnehmer, der die Berechtigung empfängt, zur Betrachtung berechtigt ist, wobei Berechtigungs-Verwaltungsnachrichten EMM's zu einer sicheren Einrichtung oder einer Gruppe von sicheren Einrichtungen gesendet werden, die EMM's jeweils eine Berechtigung und ein entsprechendes Ablaufdatum vorgeben, wobei die Berechtigungen periodisch gemäß ihren Ablaufdaten aufgefrischt werden, indem EMM's gesendet werden, die die Ablaufdaten fortschreiben, **dadurch gekennzeichnet, daß** eine Gruppe von Erweiterungs-Berechtigungs-Verwaltungsnachrichten (Erweiterungs-EMM's) zu wenigstens einem Teil aller sicheren Einrichtungen gesendet wird, wobei jede Erweiterungs-Berechtigungs-Verwaltungsnachricht anzeigt, daß alle Berechtigungen, die ein Ablaufdatum innerhalb einer vorbestimmten ersten Periode besitzen, mit einer vorbestimmten zweiten Periode erweitert sind, wobei EMM's, die die Ablaufdaten fortschreiben, nach den Erweiterungs-EMM's gesendet werden.

2. Verfahren zum Betrieb eines bedingten Zugriffsystems für Sendeanwendungen gemäß dem Gattungsbegriff des Patentanspruches 1, **dadurch gekennzeichnet, daß** jede EMM ein Berechtigungs-Ablaufdatum und ein Berechtigungs-Empfangsdatum umfaßt, welche Daten in der sicheren Einrichtung gespeichert werden, wobei eine Gruppe von Erweiterungs-Berechtigungs-Verwaltungsnachrichten, Erweiterungs-EMM's, zu allen sicheren Einrichtungen gesendet wird, jede Erweiterungs-Berechtigungs-Verwaltungsnachricht ein vorgegebenes Datum anzeigt, von welchem an alle Berechtigungen der sicheren Einrichtung nicht geändert worden sind, wobei, wenn das Empfangsdatum für irgendeine Berechtigung nach dem vorgegebenen Datum liegt, alle Berechtigungen mit einer vorbestimmten Periode erweitert werden, wobei EMM's, die die Ablaufdaten fortschreiben, nach den Erweiterungs-EMM's gesendet werden.

3. Verfahren nach Anspruch 1 oder 2, wobei die Erweiterungs-EMM's unter Verwendung von Gruppenadressierung gesendet werden.

4. Verfahren nach Anspruch 1 oder 2, wobei die Erweiterungs-EMM's unter Verwendung von individueller Adressierung gesendet werden.

5. Verfahren nach irgendeinem der vorangehenden Ansprüche, wobei die Gruppe von Erweiterungs-EMM's individuelle EMM's für vorbestimmte sichere Einrichtungen umfaßt, für welche das Abonnement geändert hat, wobei die individuellen EMM's das Ablaufdatum nur der ungeänderten Abonnements fortschreiben.

## Revendications

1. Procédé d'exploitation d'un système d'accès conditionnel pour des applications de télédiffusion, ledit système d'accès conditionnel comprenant un certain nombre d'abonnés, chaque abonné disposant d'un terminal comportant un module d'accès conditionnel et d'un dispositif sécurisé pour mémoriser des droits, chaque droit indiquant un service que l'abonné titulaire de ce droit peut regarder, dans lequel des messages de gestion de droits , ou messages EMM, sont envoyés à un dispositif sécurisé ou à un groupe de dispositifs sécurisés, lesdits messages EMM fournissant chacun un droit et une date d'expiration correspondante, dans lequel les droits sont périodiquement régénérés en conformité avec leurs dates d'expiration par envoi de messages EMM mettant à jour les dates d'expiration, **caractérisé en ce qu'**un ensemble de messages de gestion de droit de prolongation (messages EMM de prolongation) est envoyé à au moins une partie de tous les dispositifs sécurisés, chaque message de gestion de droit de prolongation indiquant que tous les droits ayant une date d'expiration inférieure à une première période prédéterminée sont prolongés d'une seconde période prédéterminée, dans lequel les messages EMM mettant à jour les dates d'expiration sont envoyés après les messages EMM de prolongation.

2. Procédé d'exploitation d'un système d'accès conditionnel pour applications de télédiffusion conformément au préambule de la revendication 1, **caractérisé en ce que** chaque message EMM comprend une date d'expiration de droit et une date de réception de droit, lesquelles dates sont stockées dans le dispositif sécurisé, dans lequel un ensemble de messages de gestion de droits de prolongation, ou messages EMM de prolongation, est envoyé à tous les dispositifs sécurisés, chaque message de gestion de droit de prolongation indiquant une date donnée à partir de laquelle tous les droits du dispositif sécurisé n'ont pas varié, dans lequel, si la date de réception pour un droit quelconque est ultérieur à ladite date donnée, tous les droits sont prolongés d'une période prédéterminée, dans lequel des messages EMM mettant à jour les dates d'expiration sont envoyés après les messages EMM de prolongation.

3. Procédé selon la revendication 1 ou 2, dans lequel les messages EMM de prolongation sont envoyés par utilisation d'un adressage groupé.

4. Procédé selon la revendication 1 ou 2, dans lequel les messages EMM de prolongation sont envoyés par utilisation d'un adressage individuel.

5. Procédé selon l'une quelconque des revendications précédentes, dans lequel l'ensemble de messages EMM de prolongation comprennent des messages EMM individuels pour des dispositifs sécurisés pour lesquels l'abonnement a été modifié, lesdits messages EMM individuels mettant à jour la date d'expiration des seuls abonnements non modifiés.
